# EUROPÄISCHE PATENTSCHRIFT

(11) **EP 0 379 941 B1**
(45) Veröffentlichungstag und Bekanntmachung des Hinweises auf die Patenterteilung: **03.04.1996**
(21) Anmeldenummer: 90100861.5
(22) Anmeldetag: 17.01.1990
(51) Int. Cl.: G01K 11/20

(54) **Fluoreszenz-Material**
Fluorescence material
Matériau de fluorescence

(30) Priorität: 24.01.1989 DE 3902001
(43) Veröffentlichungstag der Anmeldung: 01.08.1990
(73) Patentinhaber: TACAN CORPORATION, Carlsbad California 92008 (US)
(72) Erfinder: Fehrenbach, Gustav Werner, Dr., D-6450 Hanau (DE); Peukert, Doris, Dr., D-6238 Hofheim/Ts. (DE)
(74) Vertreter: Stoffregen, Hans-Herbert, Dr. Dipl.-Phys.

(56) Entgegenhaltungen:
- EP-A- 0 174 506
- EP-A- 0 259 027
- DE-A- 3 732 217
- FR-A- 2 568 238
- US-A- 4 652 143

## Beschreibung

Die Erfindung bezieht sich auf eine Verwendung eines pulverisierten Fluoreszenz-Materials, dessen Abklingdauer von der Temperatur abhängt, zur Bestimmung der Temperatur in einem Raum, wobei das Fluoreszenz-Material über einen Lichtwellenleiter optisch mit einer Einrichtung zur Erzeugung einer Anregungsstrahlung und zur Detektion und Auswertung empfangener Strahlungen verbunden ist.

Um insbesondere Temperaturen an einem Ort zu bestimmen und an einem anderen Ort auszuwerten, sind faseroptische Sensoren mit einer fluoreszierenden Substanz bekannt, deren Abklingdauer eine Aussage über die Temperatur ermöglicht. Als fluoreszierende Materialien sind Kristalle oder Gläser bekannt, in denen ein oder mehrere Elemente aus der Reihe der Übergangselemente und/oder der Seltenen Erden stöchiometrisch eingebaut oder dotiert sind. Bei der Auswahl der zu verwendenden Kristalle bzw. Gläser muß darauf geachtet werden, daß gleiche fluoreszierende Substanzen innerhalb der zulässigen Fehlergrenzen in ihrer Abklingzeit unverändert bleiben. So zeigen z. B. mit Chrom dotierte Aluminiumoxidkristalle wie Rubinkristalle dann starke Änderungen der Abklingzeiten, wenn die Konzentration der Chromionen variiert. Eine hohe Chromionenkonzentration ist jedoch wünschenswert, um Abklingzeiten zu erhalten, die eine hohe Meßgenauigkeit in bezug auf Temperaturänderungen ermöglicht.

In der DE-A 37 32 217 wird eine fluoreszierende Substanz in Form eines Kristalls beschrieben, der ein mit Chrom dotierter Yttriumaluminiumgranat (YAG) ist. Solche Kristalle werden mit dem aufwendigen Czochralsky-Verfahren gezogen. Die so gezogenen Einkristalle werden dann in Sensorkristalle zerteilt. Um eine Austauschbarkeit der Sensoren sicherzustellen, müssen die einzelnen Kristalle selektiert werden, da die Chromkonzentration in den nach dem Czochralsky-Verfahren gezogenen Einkristolle nicht konstant ist. Aus obigen Gründen muß jedoch eine gleichbleibende Konzentration gewährleistet sein, um reproduzierbare Signale zu gewinnen.

Gemäß der EP 0 259 027 A2 oder US 4,652,143 kann pulverförmiges Fluoreszenzmaterial für die faseroptische Temperaturmessung verwendet werden.

Apatite der Seltenen Erden, deren Herstellung und deren Temperaturabhängigkeit sind in der FR 2 568 238 A1 beschrieben.

Aus der DE-B 11 84 864 ist es bekannt, kristalline anorganische Leuchtstoffe in pulverisierter Form zu verwenden, aus denen eine Leuchtstoffsuspension hergestellt wird, die ihrerseits als Überzug für eine Entladungslampe benutzt wird.

Bei der Herstellung eines Leuchtstoffes der obigen Art werden die Bestandteile, aus denen der Leuchtstoff gebildet wird, zuerst geglüht, um deren Verbindung und Entwicklung der erforderlichen kristallinen Form und gewöhnlich auch die Einarbeitung eines oder mehrerer Aktivatorstoffe in das Kristallgitter zu bewirken.

Fluoreszenzleuchtstoffe, die für Farbfernseher bestimmt sind, sind in Appl. Phys. Let. 11, 1967, S. 53 bis 55 beschrieben. Solche Leuchtstoffe werden z. B. durch Brennen innig vermischter Mischungen von Ausgangsprodukten hoher Reinheit hergestellt.

Aus der SE-B 449 666 ist ein fiberoptischer Temperatursensor bekannt, bei dem das verwendete Fluoreszenz-Material in Pulverform vorliegt und in einer zylindrischen Kapsel angeordnet wird.

Der vorliegenden Erfindung liegt das Problem zugrunde, ein Fluoreszenz-Material zur Verfügung zu stellen, das im Vergleich zu solchem, das aus nach dem Czochralski-

Verfahren hergestellten Einkristallen besteht, herstellungstechnisch einfacher gewonnen werden, eine höhere Konzentration an Dotierungsmaterial aufweisen kann und das eine verbesserte Homogenität besitzt.

Das Problem wird erfindungsgemäß dadurch gelöst, daß das Fluoreszenz-Material Cr:YAG ist, das durch Homogenisieren von stöchiometrisch abgewogenen Ausgangsmaterialien in Form von Cr₂O₃, Al₂O₃ und Y₂O₃ und anschließendes Tempern über einen Zeitraum von in etwa 24 Studen bei in etwa 1400 °C hergestellt ist.

In den erfindungsgemäß verwendeten feinkörnigen Pulvern als Fluoreszenzmaterial wird durch Vielfach-Reflektion bzw. Streuprozesse eine geringe Eindringtiefe der Anregungsstrahlung und damit ein ausreichendes Sensorsignal ohne den klassischen Lichtwellenleitereffekt erzeugt, der bei den kompakt geschnittenen Sensor-Einkristallen, die selbst als Lichtwellenleiter ausgebildet sind, genutzt werden. Da mit dem pulverisiertem und homogenisiertem Fluoreszenz-Material ein hinreichendes Sensorsignal gewonnen wird, ist folglich die aufwendige Zucht von großen Einkristallen entbehrlich.

Vorzugsweise beträgt die Chromkonzentration des Fluoreszenz-Materials 1 bis 10 at-%. Schließlich besteht die Möglichkeit, daß das Fluoreszenz-Material aus pulverisierten inhomogenen Einkristallen als Ausgangsmaterial besteht.

Die Erfindung wird nachstehend an Hand eines Ausführungsbeispiels näher erläutert.

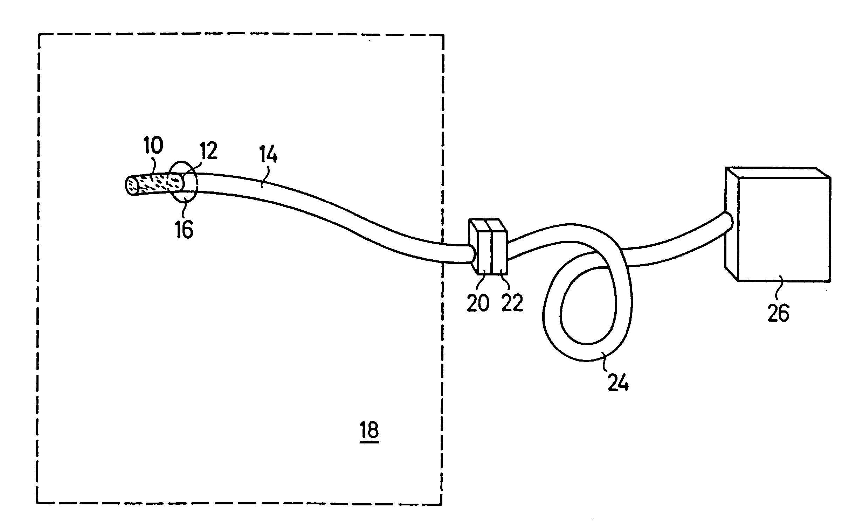

In der einzigen Figur ist ein Sensor (10) dargestellt, der aus in einer Kapsel eingeschlossenem Fluoreszenz-Material besteht, das aus pulverisierten und homogenisierten Einkristallen (12) besteht. Die Korngröße des feinkörnigen Pulvers beträgt dabei vorzugsweise < 40 µm. Als Fluoreszenz.Material ist mit Chrom-Ionen dotiertes YttriumAluminium-Granat (Cr:YAG) geeignet, wobei die Chromionenkonzentration 1 bis 10 at-% beträgt. Der Sensor (10) ist im Ausführungsbeispiel über z. B. ein Glaslot (16) mit einem ersten Lichtwellenleiter verbunden. Sensor (10) und Lichtwellenleiter (14) befinden sich dabei in einem Raum (18), dessen Temperatur mittels der Abklingdauer des Fluoreszenz-Materials bestimmt werden soll. Der Lichtwellenleiter (14) ist raumaußenseitig an ein Steckelement (20) eines Steckverbinders für Lichtwellenleiter angeschlossen. Das andere Steckelement (22) des Steckverbinders ist mit einem Endes eines zweiten Lichtwellenleiters (24) verbunden. Der Lichtwellenleiter (22) ist seinerseits mit einer Einrichtung zur Erzeugung einer Anregungsstrahlung sowie zum Detektieren und Auswerten der über die ersten und zweiten Lichtwellenleiter (14) und (24) zugeleiteten Strahlung des Sensors (10) verbunden. Mit der Einrichtung (26) wird die Fluoreszenz-Abklingdauer der Strahlung des Fluoreszenz-Materials (12) gemessen.

## Patentansprüche

1. Verwendung eines pulverisierten Fluoreszenz-Materials, dessen Abklingdauer von der Temperatur abhängt, zur Bestimmung der Temperatur in einem Raum (18), wobei das Fluoreszenz-Material (12) über einen Lichtwellenleiter (14, 22) optisch mit einer Einrichtung (26) zur Erzeugung einer Anregungsstrahlung und zur Detektion und Auswertung empfangener Strahlung verbunden ist,
**dadurch gekennzeichnet,**
daß das pulverisierte Fluoreszenz-Material Cr:YAG ist, das durch Homogenisieren von stöchiometrisch abgewogenen pulverförmigen Ausgangsmaterialien in Form von Cr₂O₃, Al₂O₃ und Y₂O₃ und anschließendes Tempern über einen Zeitraum von in etwa 24 Stunden bei in etwa 1400 °C hergestellt ist.

2. Verwendung nach Anspruch 1,
**dadurch gekennzeichnet,**
daß das homogenisierte Fluoreszenz-Material eine Korngröße von unter 40 µm aufweist.

3. Verwendung nach Anspruch 1 oder 2,
**dadurch gekennzeichnet,**
daß die Chromkonzentration des Yttrium-Aluminium-Granat 1 bis 10 at-% beträgt.

4. Verwendung nach Anspruch 1,
**dadurch gekennzeichnet,**
daß das Fluoreszenz-Material aus pulverisierten inhomogenen Einkristallen als Ausgangsmaterial besteht.

## Claims

1. Use of a pulverized fluorescent material, whose decay time is temperature-dependent, for determining the temperature in a room, said fluorescent material being optically connected, through a light wave guide, to a device disposed to generate exciting radiation and to detect and evaluate received radiation,
**characterized in that**
said pulverized fluorescent material is Cr : YAG produced by homogenizing of stoichiometrically weighed pulverized start material of Cr₂O₃, Al₂O₃ and Y₂O₃ and following tempering over a time span of 24 hours at a temperature of about 1.400°C.

2. Use as defined in claim 1,
**characterized in that**
the homogenized fluorescent material has a grain size below 40 µm.

3. Use as defined in claim 1 or 2,
**characterized in that**
the chromium concentration of the yttrium aluminium garnet is 1 through 10 at%.

4. Use as defined in claim 1,
**characterized in that**
the fluorescent material consists of pulverized inhomogeneous single crystals as start material.

## Revendications

1. Utilisation d'un matériau fluorescent pulvérisé dont le temps d'amortissement dépend de la température, pour déterminer la température dans un volume (18), le matériau fluorescent (12) étant relié par l'intermédiaire d'un guide d'ondes optiques (14, 22), de manière optique à une installation (26) générant un rayonnement d'excitation et pour détecter et exploiter le rayonnement reçu, caractérisée en ce que le matériau fluorescent pulvérisé est du Cr:YAG obtenu par homogénéisation de matière première à l'état de poudre, pesée selon les proportions stoechiométriques, sous la forme de Cr₂O₃, Al₂O₃ et Y₂O₃, puis mise en équilibre de température pendant une durée d'environ 24 heures à 1400°C.

2. Utilisation selon la revendication 1, caractérisée en ce que le matériau fluorescent homogénéisé a une granulométrie inférieure à 40 µm.

3. Utilisation selon la revendication 1 ou 2, caractérisée en ce que la concentration en chrome d'yttrium-aluminium-grenat est comprise entre 1 et 10 % atomiques.

4. Utilisation selon la revendication 1, caractérisée en ce que le matériau fluorescent est formé de monocristaux non homogènes, pulvérisés à partir de la matière première.
